# EUROPEAN PATENT APPLICATION

(11) **EP 2 631 875 A1**
(43) Date of publication of application: **28.08.2013**
(21) Application number: 12382415.3
(22) Date of filing: 29.10.2012
(51) Int. Cl.: G06T 11/00

(54) **Automatic caricaturing system and method maintaining the style of the draftsman**

(71) Applicant: Meubook, S.L., 36310 Vigo - Pontevedra (ES)
(72) Inventor: Perez Freire, Luis, 36310 Vigo - Pontevedra (ES); Gonzalez Jimenez, Daniel, 36310 Vigo - Pontevedra (ES)
(74) Representative: Carvajal y Urquijo, Isabel

(57) **Abstract**

The present invention relates to an automatic caricaturing system and method maintaining the style of the draftsman, to generate a caricature (132) from an input photograph (124). The system comprises an automatic caricaturing module (128) configured for:
- obtaining (700) a facial point reference mesh of a face in the input photograph (124);
- obtaining from a caricaturing style model (118) of the draftsman (104):
• transformation model T (420);
• appearance model *A* (424) with facial feature appearance descriptors of reference photographs;
• configuration information (206);

- applying (706) the transformation model T (420) to obtain a caricatured mesh *D;*
- comparing the facial feature appearance descriptors of the input photograph (124) with the appearance model A (424), selecting (708) the facial features and patches to be applied;
- composing (712) the caricature (132) using the configuration information (206) and placing and deforming the patches such that their reference points adapt to those of the caricatured mesh D.

## Description

### Field of the Invention

The present invention is encompassed within the fields of automatic facial feature processing and automatic caricaturing.

### Background of the Invention

Caricaturing help systems can be divided into two large groups. The first group is formed by interactive applications (see literature references [Akleman90, Akleman00, Akleman04, Fu06, Gao08b]), where the user must manually act on the system modifying the parameters which will give shape to the caricature.

The second of the groups, in which caricaturing is performed automatically, can in turn be subdivided according to whether or not learning is performed, i.e., if the system is capable of imitating (at least in part) the style of a particular creator or draftsman. Articles [Mo04, Fu06] can be found among those which do not learn, while [Gao08a, Liu09, Liu06, Brennan82, Clarke11] do learn or imitate a particular style.

When making caricatures automatically imitating an artist, primarily two style aspects must be learnt:
a) Transformations: all those variations and exaggerations which the artist applies to the shape of the face, deforming those features deemed convenient to emphasise them according to his/her style. The transformations which an artist applies generally depend on the face which he/she is caricaturing. An example of these transformations can be widening the nose, shrinking the eyes, etc.
b) Drawing style: Each artist has his/her own drawing style, whether it is using strokes, spot colours, etc. In order for automatically generated caricatures to be true to the style of a creator, not only does the exaggeration of the features have to coincide, but its aesthetics has to be as close as possible to it.

A prior learning step in which a series of reference photographs and their corresponding reference caricatures are used is generally necessary when automatically learning or performing the transformations characteristic of a style. A set of reference points (commonly related to primary facial features such as eyes, eyebrows, nose, mouth and contour of the face) is identified both in the photographs and in the caricatures. Each of these sets of reference points is called "mesh" or "reference mesh". The transformations applied to the shape of the different features are learnt as a result of these meshes whether by directly using the points like [Brennan82, Akleman90, Akleman00, Akleman04, Fu06, Gao08a, Mo04, Clarke11, Fu06], or by applying dimensionality reduction techniques to only learn the main transformations [Liu09, Liu06, Gao08b],.

Although some systems do learn the transformations in shape of a particular style, none of them imitate the drawing style of the original creator when generating the final caricature. Some of them apply warping techniques with which they deform the original photograph (according to the learnt transformations) to generate a caricatured image [Clarke11, Liu06], while others apply different techniques (edge enhancement, binarization, etc.) to generate non-photorealistic images, known as sketches [Gao08a].

In terms of patent documents, patent US7483553-B2 relates to a facial caricaturing method in which a drawing is initially generated from the input image (which can be a sketch or directly one of the reference caricatures selected because of its likeness; it is important to highlight that in this last case a previously drawn complete caricature is selected, a new caricature is not composed from the reference caricatures) and a point mesh of interest of the different facial features is obtained. Using the information obtained from the photographs and the reference caricatures, the system decides which features will be caricatured and, by means of regression techniques, applies a transformation to the point mesh to obtain the caricatured shape. Finally, it transfers this transformation to the initially generated drawing by means of morphing.

Patent US7660482-B2 discloses a method for converting a photo into a caricature. After locating the facial features of interest in the photograph, a search is performed among the reference drawings and the drawing with the best likeness is selected for each feature. The features in the original photograph are replaced with the selected features, warping techniques are applied to exaggerate the caricature and the image is converted into a non-photorealistic format. In this case, the transformations applied to the features are not learnt.

Patent document US2010/0254594-A1 discloses a sketch generating method and system, where the recording phase consists of extracting the facial features in a series of reference images and drawing them separately, without using information about the entire image. The facial features are located and the most similar sketches are searched for in the data base. The caricature is finally composed using the selected sketches. The disclosed system does not learn the transformations which must be applied to the caricature, but rather it uses patches of previously drawn caricatures. The "patch" concept represents each of the elements into which previously drawn caricatures are divided. For example, these could be divided into eyes, eyebrows, nose and mouth, and when generating a new caricature one of these patches would be used for the eyes, another for the eyebrows, another for the nose and another for the mouth.

Document AU200172064-A discloses a method for converting a photograph into a caricature. To that end, the facial features are located and those which are most similar available in the data base are selected. The caricatured image is composed using the selected patches.

There are other related patent documents, such as JP2009521065-A, US20070019885-A1, CN100413362C and EP1704533B1, but no learning is performed in them and patches are not used either, so the style of the creator is not imitated.

Therefore, the state of the art contains no automatic caricaturing methods maintaining the style of the draftsman, learning the transformations which the creator performs and imitating the creator's drawing style like the system proposed in the present invention.

### Literature References

[Brennan82] Susan Brennan. The Caricature Generator. MIT Media Lab master's thesis, 1982.
[Akleman97] E. Akleman. Making Caricatures with Morphing. Visual Proceedings of ACM SIGGRAPH'97, 134, Aug. 1997.
[Akleman00] E. Akleman, J, Palmer, R. Logan, "Making Extreme Caricatures with a New Interactive 2D Deforming Technique with Simplicial Complexes", Proceedings of Visual 2000, pp. Mexico City, Mexico, pp. 165-170, September 2000.
[Akleman04] Ergun Akleman and Jon Reisch "Modeling Expressive 3D Caricatures", SIGGRAPH 2004.
[Gao08a] X. Gao, J. Zhong, D. Tao, X. Li, Local face sketch synthesis learning, Neurocomputing 71 (10-12) (2008) 1921-1930
[Koshimizu97] H. Koshimizu: Computer Facial Caricaturing, Trans. The Institute of Image Information and Television Engineers, Vo1.51, No.8, pp. 1140-1146 (1997.8).
[Liu09] J Liu, AND Chen, J Xie, X Gao, W Gao, Semi-supervised Learning of Caricature Pattern from Manifold Regularization - Proceedings of the 15th International Multimedia 2009.
[Mo04] Improved Automatic Caricature by Feature Normalization and Exaggeration Mo Z., Lewis and Neumann U., ACM SIGGRAPH 2004 Conference Abstracts and Applications
[Skaria01] S. Skaria, E. Akleman, F. Parke, "Modeling Subdivision Control Meshes for Generating Cartoon Faces", Proceedings of Shape Modeling 2001, Genova, Italy, pp. 216-227, May 2001.
[Tokuda07] Tokuda, N.; Hoshino, T.; Watanabe, T.; Funahashi, T.; Fujiwara, T.; Koshimizu, H., "Caricature generation system PICASSO-2 exhibited at expo2005 and its performance improvement," International Conference on Control, Automation and Systems, pp.1354-1358, 2007
[Zhong07] J. Zhong, X. Gao, C. Tian, Face sketch synthesis using E-HMM and selective ensemble, in: Proceedings of IEEE International Conference on Acoustics, Speech, and Signal Processing, Honolulu, Hawaii, USA, 15-20 April 2007, pp. 485-488.
[Clarke11] L. Clarke, M. Chen, B. Mora. Automatic Generation of 3D Caricatures Based on Artistic Deforming Styles, IEEE Transactions on Visualization and Compter Graphics, vol. 17, no. 6, 2011.
[Fu06] G. Fu, AND. Chen, J. Liu, J. Zhou, and P. Li. Interactive Expressive 3D Caricatures Design, Proc. Conf. IEEE Multimedia and Expo, pp. 965-968, 2008.
[Liu06] J. Liu, AND. Chen, and W. Gao, "Mapping Learning in Eigenspace for Harmonious Caricature Generation, Proc. ACM Int'l Conf. Multimedia, pp. 683-686, 2006.
[Gao08b] X. Gao, AND. Chen, J. Liu, and J. Zhou, "Personalized 3D Caricature Generation Based on PCA Subspace," Proc. Pacific Rim Conf. Multimedia (PCM '08), pp. 713-720, 2008.
[Akleman05] E. Akleman, "Automatic Creation of Expressive Caricatures: A Grand Challenge for Computer Graphics," Proc. Symp. Computational Aesthetics, 2005.
[Jollife2002] I.T. Jolliffe. Main Component Analysis, Springer, 2002. [Hyvärinen2001] Aapo Hyvärinen, Juha Karhunen, Erkki Oja. Independent Component Analysis, John Wiley & sons, 2001.
[Smola2004] Alex J. Smola, Bernhard Schölkopf. A tutorial on support Vector Regression, Statistics and Computing, vol. 14, issue 3, pp. 199-222, 2004.
[Ojala1996] T. Ojala, M. Pietikäinen, D. Harwood, A Comparative Study of Texture Measures with Classification Based on Featured Distributions, Pattern Recognition, vol. 29, No. 1, pp. 51-59, 1996.
[Gabor1946] D. Gabor. Theory of Communication, Journal of Institute for Electrical Engineering, Vol. 93, 1946.
[Cootes2001] T.F. Cootes, G.J. Edwards, C.J. Taylor. Active Appearance Models, IEEE Transactions on Pattern Analysis and Machine Intelligence, vol. 23, issue 6, 2001.
[Cootes1995] T.F. Cootes, C.J. Taylor, D.H. Cooper, J. Graham. Active Shape Models: Their Training and Application, Computer Vision and Image Understanding, vol. 61, pp. 38-59, 1995.
[Huttenlocher1993] D.P. Huttenlocher. Comparing Images Using the Hausdorff Distance, IEEE Transactions on Pattern Analysis and Machine Intelligence, vol. 15, issue 9, 1993.
[Goodall1991] C. Goodall. Procrustes Methods in the Statistical Analysis of Shape, Journal of the Royal Statistical Society. Series B (Methodological), vol. 53, no. 2, pp. 285-339, 1991.

### Description of the Invention

The present invention proposes a system and an automatic caricaturing method maintaining the style of the draftsman.

The automatic caricaturing system for generating a caricature from an input photograph comprises an automatic caricaturing module configured for:
- obtaining a facial point reference mesh of a face present in the input photograph;
- accessing a caricaturing style model of the draftsman generated from reference photographs and their corresponding reference caricatures made by the draftsman, and obtaining from said style model:
   - a transformation model collecting the transformations necessary for converting reference photograph meshes into their corresponding caricatured meshes;
   - an appearance model collecting facial feature appearance descriptors of reference photographs;
   - configuration information, in which the manner of composing the caricature is specified;
- applying the transformation model to the obtained mesh of the input photograph to obtain a caricatured mesh;
- obtaining the facial feature appearance descriptors of the input photograph, comparing them with the descriptors of the reference photographs included in the appearance model, and selecting the facial features most similar to the input features of the input photograph depending on said comparison and the patches corresponding to each of these features to be applied in generating the caricature according to the configuration information;
- composing the caricature using the configuration information and by means of placing and deforming the patches corresponding to each of the selected facial features, such that their reference points adapt to those of the obtained caricatured mesh.

The automatic caricaturing module can additionally be configured for:
- obtaining from the style model:
   - a normalisation model, including a normalisation model for normalising reference photograph meshes and a normalisation model for normalising meshes of their corresponding reference caricatures;
   - a dimensionality reduction model, including a dimensionality reduction model obtained with reference photograph meshes and a dimensionality reduction model obtained with meshes of their corresponding reference caricatures;
- normalising the obtained mesh of the input photograph using the normalisation model, obtaining a normalised mesh;
- reducing the dimensionality of the normalised mesh by means of its projection by applying the dimensionality reduction model, obtaining a mesh before applying the transformations;
- reconstructing the caricatured mesh from the projection resulting from applying the transformations and the dimensionality reduction model.

The configuration information preferably contains the specifications for composing the caricature in different poses and facial expressions.

The automatic caricaturing module can additionally be configured for applying a colour configuration to the selected facial feature patches, a pose and facial expression selection, a hairstyle selection or an accessory selection to be added to the generated caricature according to a specific user configuration.

In a preferred embodiment the system comprises a learning module configured for:
- learning the transformations necessary for converting reference photograph meshes into their corresponding caricatured meshes, obtaining a transformation model;
- extracting an appearance model with facial feature appearance descriptors of reference photographs;
- generating the style model, including the transformation model, the appearance model and the configuration information.

The learning module can additionally be configured for:
- normalising reference meshes, obtaining a normalisation model including a normalisation model for normalising reference photograph meshes and a normalisation model for normalizing meshes of their corresponding reference caricatures;
- performing dimensionality reduction on the normalised reference meshes, obtaining a dimensionality reduction model including a dimensionality reduction model obtained with reference photograph meshes and a dimensionality reduction model obtained with meshes of their corresponding reference caricatures;
- including the normalisation model and the dimensionality reduction model in the generated style model.

The system preferably comprises a recording module configured for:
- collecting reference facial points for obtaining reference meshes of the reference photographs and their corresponding reference caricatures;
- collecting configuration data for obtaining configuration information.

The configuration information collected in the recording module preferably includes the configuration for different poses and/or facial expressions, a colour palette, the configuration for different accessories and/or the configuration for different hairstyles.

The system can comprise:
- a reference photograph repository where the reference photographs are stored, and
- a reference caricature repository where the caricatures of the reference photographs made by the draftsman are stored.

Another aspect of the present invention relates to an automatic caricaturing method maintaining the style of the draftsman to generate a caricature from an input photograph. The method comprises:
- obtaining a facial point reference mesh of a face present in the input photograph;
- accessing a caricaturing style model of the draftsman generated from reference photographs and their corresponding reference caricatures made by the draftsman , and obtaining from said style model:
   - a transformation model collecting the transformations necessary for converting reference photograph meshes into their corresponding caricatured meshes;
   - an appearance model collecting facial feature appearance descriptors of reference photographs;
   - configuration information in which the manner of composing the caricature is specified;
- applying the transformation model to the obtained mesh of the input photograph to obtain a caricatured mesh;
- obtaining the facial feature appearance descriptors of the input photograph, comparing them with the descriptors of the reference photographs included in the appearance model, and selecting the facial features most similar to the input features of the input photograph depending on said comparison and the patches corresponding to each of these features to be applied in generating the caricature according to the configuration information;
- composing the caricature using the configuration information and by means of placing and deforming the patches corresponding to each of the selected facial features, such that their reference points adapt to those of the obtained caricatured mesh.

The method can also comprise:
- obtaining from the style model:
   - a normalisation model, including a normalisation model for normalising reference photograph meshes and a normalisation model for normalising meshes of their corresponding reference caricatures;
   - a dimensionality reduction model, including a dimensionality reduction model obtained with reference photograph meshes and a dimensionality reduction model obtained with meshes of their corresponding reference caricatures;
- normalising the obtained mesh of the input photograph using the normalisation model, obtaining a normalised mesh;
- reducing the dimensionality of the normalised mesh by means of its projection by applying the dimensionality reduction model, obtaining a mesh before applying the transformations;
- reconstructing the caricatured mesh from the projection resulting from applying the transformations and the dimensionality reduction model.

The configuration information can include the specifications for composing the caricature in different poses and/or facial expressions, a colour palette, the configuration for different accessories and/or the configuration for different hairstyles.

The method can comprise applying a colour configuration to the selected facial feature patches, a pose and facial expression selection, a hairstyle selection or an accessory selection to be added to the generated caricature according to a specific user configuration.

The method preferably comprises:
- collecting reference facial points for obtaining reference meshes of the reference photographs and their corresponding reference caricatures;
- collecting configuration data for obtaining configuration information.

The present invention provides a series of novelties with respect to the state of the art:
- It learns both the transformations and drawing style of the creator.
- It applies both warping as patch selection for generating the caricature.
- The drawing style does not necessarily have to be with sketches and allows colour.
- It records the information necessary for learning the drawing style of the creator. Complete caricatures of real photographs and not facial features separately are drawn in this record.
- It allows including different accessories (such as glasses, earrings, hats, etc.) in the caricature automatically.
- It allows including different hairstyles which can be selected manually.
- It allows selecting colours of the different facial features and objects (eyes, hair, skin, glasses, etc.).
- It allows generating caricatures in different poses (frontal, profile, etc.) and facial expressions (surprise, sadness, neutral, etc.) from a single photograph.
- The configuration of each of the poses and facial expressions, as well as the order in which the objects will be placed in each of them (forming the different "layers" of the image) is flexible

The present invention provides the following advantages with respect to the state of the art:
- The use of facial feature patches of reference caricatures for composing the automatically generated caricature allows more precisely adapting to the drawing style of the creator.
- The use of warping techniques and learning through complete reference caricatures allows learning and more precisely reflecting the characteristic transformations of the creator in the automatically generated caricatures.
- The use of facial feature patches of the reference caricatures for composing the automatically generated caricature allows adapting to a wide variety of different styles.
- The hairstyle, accessory and colour selection allows greater customization of the caricature.
- The possibility of including different poses and facial expressions allows including the caricature in comics, short stories, etc.
- The possibility of configuring the order in which the different layers of the caricature will be placed allows the system to adapt to a wider variety of styles.
- Normalising the different point meshes in scale, rotation and translation allows the system to abstract the information which is not relevant for the final result of the caricature and reducing the amount of information which the system must learn and model.
- Using dimensionality reduction techniques allows learning only the significant transformations made by the creator and learning using a lower number of reference photographs and caricatures.

### Brief Description of the Drawings

A series of drawings which aid in better understanding the invention and expressly relate to an embodiment of said invention presented as a non-limiting example thereof will be very briefly described below.
Figure 1 depicts the block diagram of the system object of the invention, showing the different phases which make it possible
Figure 2 shows the block diagram of the actions carried out by the recording module.
Figure 3 shows examples of sets of reference points which can be used both for the original photographs and for the caricatures.
Figure 4 shows the block diagram of the learning module.
Figure 5 is an example of the three main variation modes of the normalised point meshes of the reference images.
Figure 6 shows an example of converting a point mesh corresponding to an original image into two caricatured meshes, each using a different set of points.
Figure 7 shows the block diagram of the caricature generating module.
Figure 8 shows a selection of caricature patches by way of example.
Figure 9 shows a caricature in which each of the facial features has been separated in its corresponding "patch" by way of example.
Figure 10 shows an example of automatic caricaturing.

### Detailed Description of the Invention

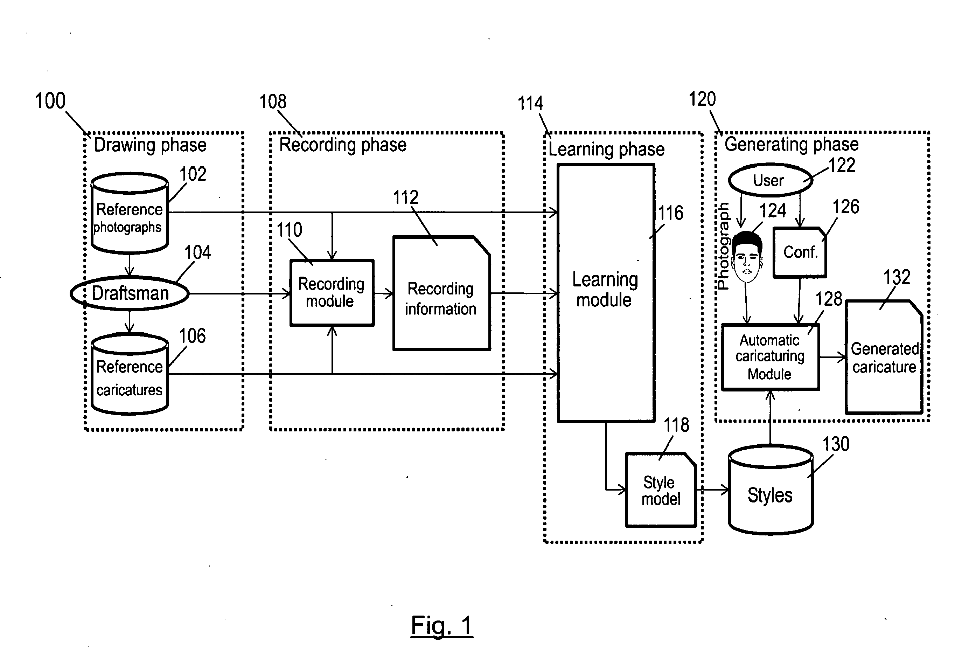

Figure 1 shows a block diagram of the invention. It consists of four phases. In the first phase, called drawing phase 100, the draftsman makes the caricatures of a set of reference photographs. These caricatures have to be captured in a format which allows separating the different patches (for example nose, eyes, mouth, etc.) such as for example the free SVG format or a proprietary format. In the second phase (recording phase 108) the necessary information on the style is compiled. In the learning phase 114 the style model is generated. Finally, the learned style model is applied in the generating phase 120 to automatically generate a new caricature. Once the three phases (drawing 100, recording 108 and learning 114) have been performed for a particular style, it is not necessary to repeat them every time a new automatic caricature is to be generated following that style.

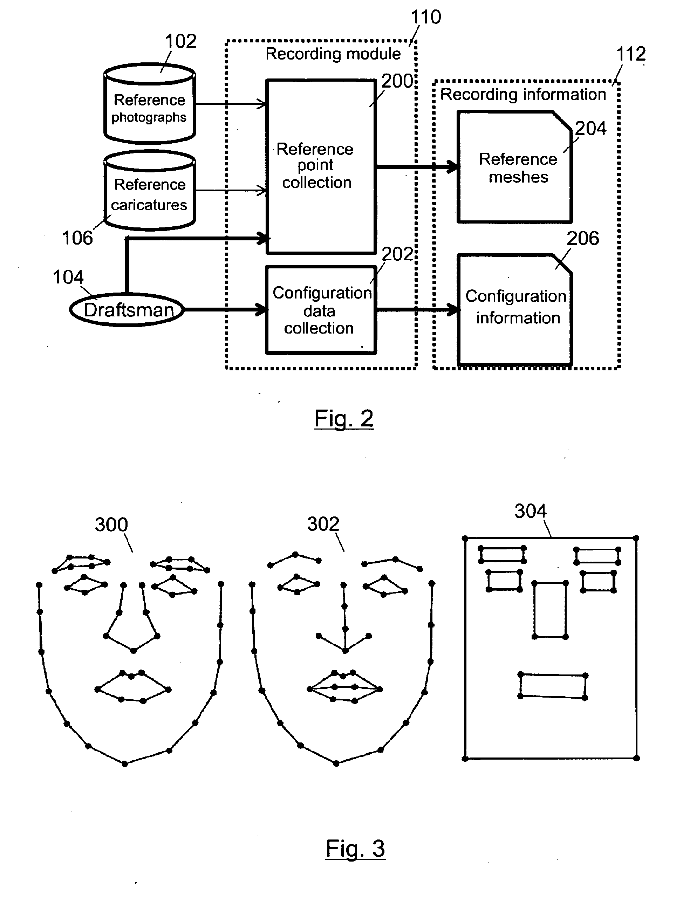

Once the drawing phase 100 has ended, the recording module 110 is responsible for collecting the information necessary for modelling a caricaturing style from accessing a repository 102 (for example a data base) with reference photographs (each with the corresponding reference facial points) and another repository 106 with the reference caricatures made by the draftsman 104 the style of which is to be learned. Different combinations of reference facial points can be chosen to form the meshes, and this combination does not have to be the same for the meshes of the original photographs and for their caricatures. Figure 3 shows examples of point meshes which could be used. For example, the meshes of the reference photographs could have format 300, 302 or 304 (all the meshes of the reference photographs used to generate a particular model must have the same format) and their caricatures format 300, 302 or 304 (all the meshes of the reference caricatures used to generate a particular model must have the same format, but it does not necessarily have to be the same as that of the meshes of the reference photographs). A learning module 116 is responsible for extracting a style model 118 using the information on the style collected by the recording module 110 and stores it in a style repository 130 (for example, a data base). An automatic caricaturing module 128 generates new caricatures 132 following the style model generated by the learning module 116 from an input photograph 124 and a configuration 126 selected by a user 122. The automatic caricaturing module accesses the style repository 130 to obtain the necessary information about a particular style.

The recording module 110 is responsible for compiling all the necessary information about the style for the learning module 116. The recording module 110 performs the following actions, shown in the block diagram of Figure 2:
- Collecting reference points 200. This module is responsible for collecting the following data:
   - Reference facial points of the reference photographs. These points can be input manually by the draftsman 104, be collected beforehand in the reference photograph repository or be extracted automatically.
   - Reference facial points of the reference caricatures in each of the drawn poses and facial expressions. These points can be input manually by the draftsman 104 or extracted automatically from the reference caricatures.

The set of points collected for each of the images (reference photographs or reference caricatures) will form the "reference meshes" 204. Figure 3 shows examples of different meshes which can be used.

As mentioned above, the meshes can be obtained by means of manually specifying points (for example by means of clicking) or by means of automatically extracting data (using, for example, the information about the layers or Active Appearance Models AAM [Cootes2001]) both for the reference photographs and for the caricatures.
- Collecting configuration data 202 for obtaining configuration information 206 (this information will contain at least the configuration for a pose and facial expression). The draftsman 104 inputs the following configuration information for the style:
   - Definition of patches (for example the different facial features) present in the caricatures (names, tags, colours, etc.).
   - Definition of types of hairstyles and other information about them (placement, colour, etc.).
   - Definition of types of accessories and other information about them (placement, colour, etc.). Accessories are optional and will complement the caricature.
   - Colour palette in which the colours which the user could choose for the different facial features, hairstyles or accessories are specified. This palette is not strictly necessary but will only be used in those cases in which the user is to be provided with the option of selecting different colours of some features, such as for example eyes, hair, etc.
   - The patches and accessories which are present, as well as their order of placement in the different "layers" of the image will be specified for each of the poses and facial expressions.

Therefore, the recording information 112 made up of the reference meshes 204 of the reference photographs and of the reference caricatures and the configuration information 206 is obtained by means of the recording module 110.

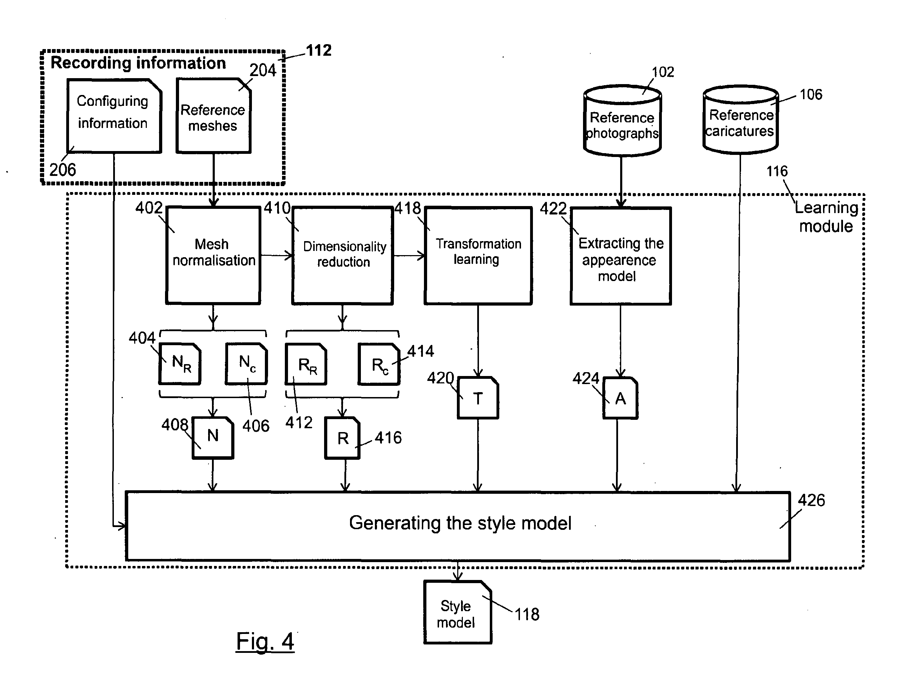

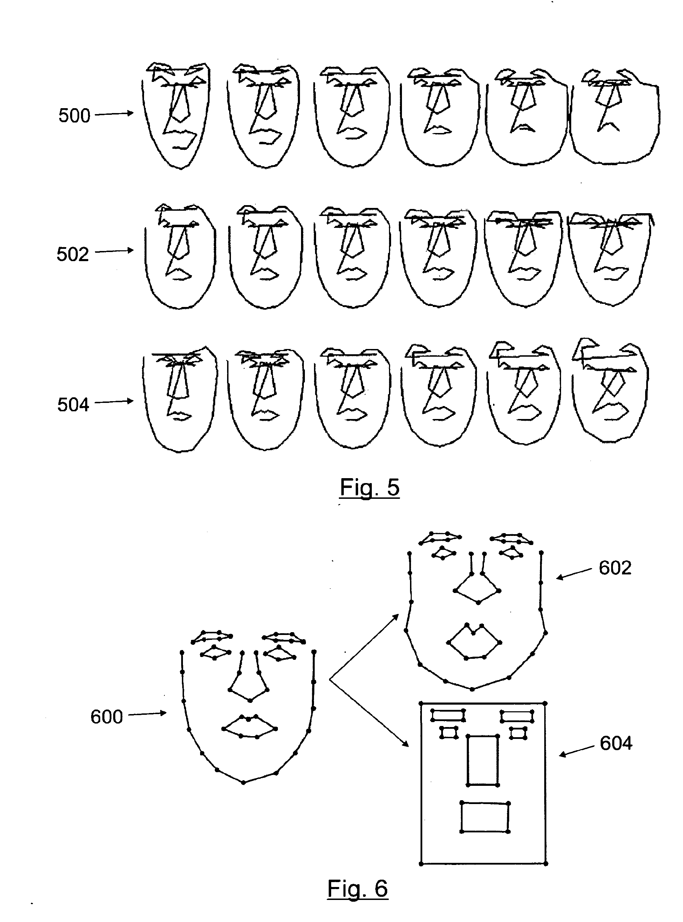

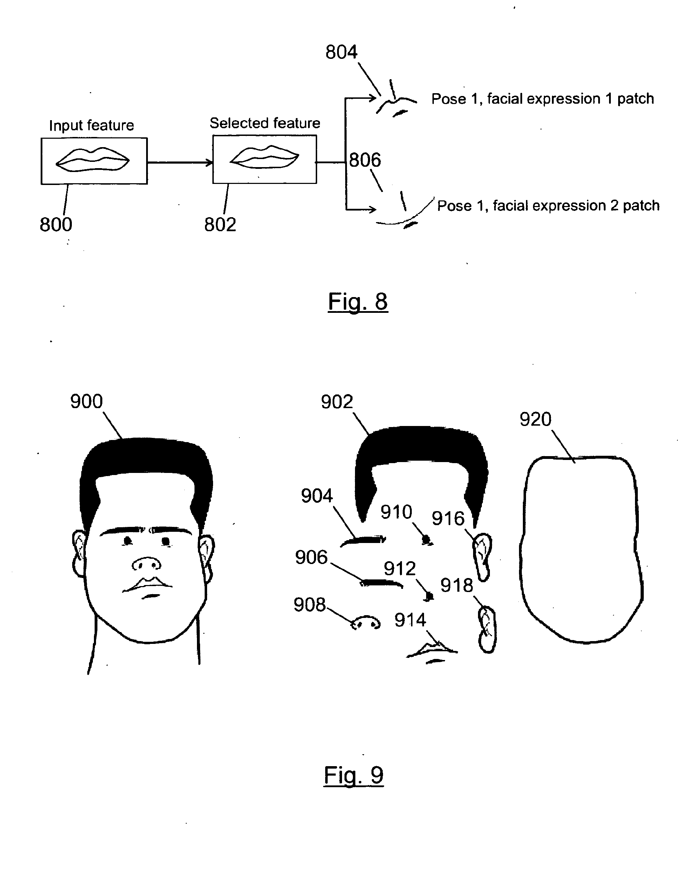

Figure 4 shows the block diagram of the learning module 116. The learning module 116 generates a style model 118 using the recording information 112 made up of reference photographs (and their point meshes), reference caricatures (and their point meshes) and the configuration information 206 collected in the recording phase 108. This style model 118 will be made up of a normalisation model *N* 408, a dimensionality reduction model *R* 416, a transformation model *T* 420 and an appearance model *A* 424. The steps followed in the learning module 116 are the following:
1. Reading recording information 112 generated in the recording phase 108.
2. Normalising meshes 402 (in translation, scale and rotation), which includes normalising the point meshes of the reference photographs and normalising the point meshes of the reference caricatures. The model obtained for normalising the meshes of reference photographs will be called *N_{R}* 404 and the model obtained for normalising the meshes of reference caricatures will be called *N_{C}* 406. One of the methods which can be used for performing this rigid normalisation (i.e., it only affects translation, scale and rotation without modifying the shape) is *Procrustes* [Goodall1991]. The normalisation model *N* 408 will be thus be made up of *N_{R}* 404 and *N_{C}* 406.
3. Dimensionality reduction 410 for eliminating implausible shapes, limiting the learnt transformations and improving learning. It is performed separately in the meshes of reference photographs and caricatures. The dimensionality reduction model obtained with the meshes of reference photographs will be called *R_{R}* 412, and those obtained with the meshes of their caricatures will be called *R_{C}* 414. The dimensionality reduction model *R* 416 will be made up of *R_{R}* 412 and *R_{C}* 414. One of the possible methods for performing this reduction are PCA (Principal Component Analysis) algorithms [Jolliffe2002] and ICA (Independent Component Analysis) algorithms [Hyvärinen2001], both techniques being of common knowledge in the field of the invention. Figure 5 shows an example of the three main variation components (called "modes") of the meshes of a set of reference photographs, i.e., an example of the three main modes captured by the PCA algorithm from the normalised meshes of the reference images. The first of the modes 500 captures the face width and mouth shape variation. The second mode 502 captures changes in eye size while the third mode 504 captures variations in mouth size.
4. Learning the transformations 418 necessary for converting the meshes of the reference photographs into their corresponding caricatured meshes. The transformation model 420 obtained will be called T. Some examples of the algorithms which can be used for learning this transformation are SVR (Support Vectors for Regression) [Smola2004], linear regression or quadratic regression.
5. Extracting the appearance model 422, i.e., obtaining the appearance descriptors for each of the facial features of the reference photographs serving to find those facial features most similar to the input photograph for selecting the patches which will be used when generating a new caricature automatically. This appearance model 424 will be called A. These descriptors can be, for example: grey scale, Gabor filters [Gabor1946] or LBPs (Local Binary Patterns) [Ojala1996].
6. Generating 426 the information of the style model 118 for the caricature generating phase 120. This style model 118 contains the following information:
   ➢ Normalisation model *N* 408, whereby the reference meshes were normalised in rotation, scale and translation and will serve to normalise the mesh of the image input by the user into the caricaturising apparatus.
   ➢ Dimensionality reduction model *R* 416 applied to the normalised reference meshes and which will be applied to the normalised mesh of the input image.
   ➢ Transformation model *T* 420, collecting the transformations necessary for converting the meshes of the reference photographs into their corresponding caricatured meshes.
   ➢ Appearance model *A* 424, which will allow selecting the facial features of the reference photographs most similar to those of the image input by the user in the caricaturing system.
   ➢ The model will contain the reference caricatures since the patches for
   generating the final caricature will subsequently be extracted from them. ➢ Furthermore, these style model files 118 will contain the configuration information 206 collected in the recording phase 108.

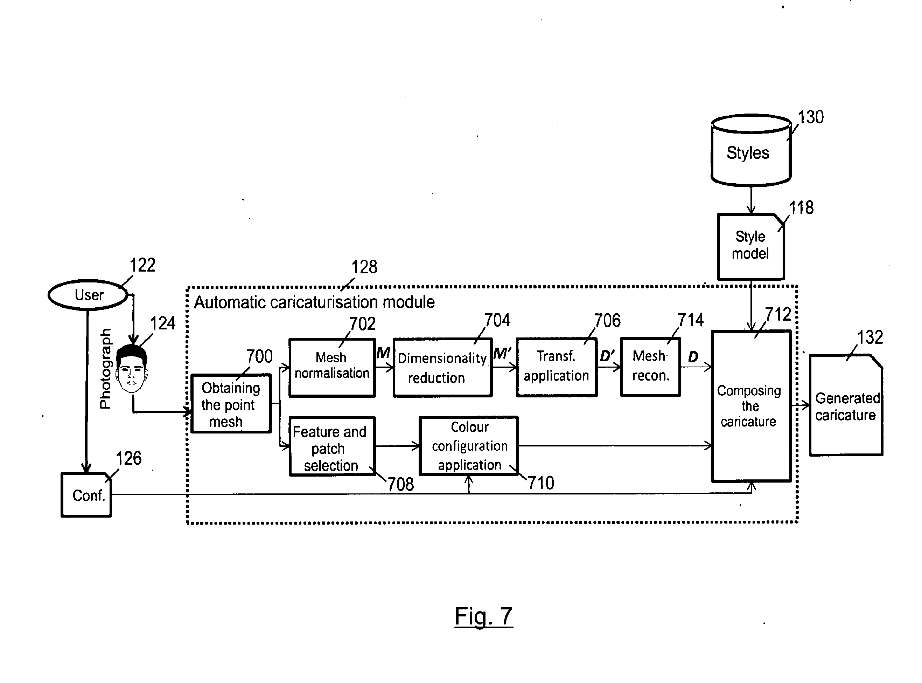

Figure 7 shows the block diagram of the automatic caricaturing module 128. This automatic caricaturing module 128 generates a caricature 132 for a given input photograph 124 using the style model 118 generated in the learning phase 114. The steps followed in the automatic caricaturing module 128 are the following:
   1. The user 122 selects a configuration 126 (for example, drawing style, hairstyles, accessories to be included, colours, etc.).
   2. Loading the selected style model 118 which is stored in the style repository 130 and has been generated in the learning phase 114.
   3. Obtaining the reference point mesh 700 of the face present in the input photograph 124. This mesh can be manually specified by the user 122 or obtained automatically by means of, for example, adjusting AAM (Active Appearance Models) [Cootes2001] or ASM (Active Shape Models) [Cootes1995].
   4. Normalising the obtained mesh 702 of the input photograph 124 using the normalisation model *N* 408 stored in the style model 118. The normalised mesh will be called *M*.
   5. Reducing the dimensionality 704 of the mesh *M* by means of its projection by applying the dimensionality reduction model *R* 416 (particularly *R_{R}* 412) stored in the style model 118. The projection obtained will be called *M'.*
   6. Applying the learnt transformations 706, i.e., applying the transformation model *T* 420 on *M*' to obtain the projection *D*'.
   7. Reconstructing 714 the caricatured mesh *D* from the projection *D*' (*d'*_{1,}..., *d'ₙ*) and from the dimensionality reduction model *R* 416 (particularly *R_{c}* 414), such that the weight assigned to each of the modes depicted in the dimensionality reduction model *R* 416 (particularly in *R_{C}* 414) corresponds to each of the dimensions of *D*'. Figure 6 shows a mesh of a reference photograph 600 and two different caricatured meshes, one using the same mesh format as the original 602 and the other with a different mesh format 604.
   8. Obtaining the appearance descriptors for each of the facial features of the input photograph 124. These descriptors will be of the same type as those used in obtaining 426 the appearance model *A* 424 of the style.
   9. Selecting the patches of the caricature 708. To that end, the appearance descriptors of the input photograph 124 are compared with the appearance model *A* 424 and those features which are most similar are selected. This selection can be performed in various ways, such as for example by selecting those with a greater correlation, those with a lower Euclidean distance or minimising the Hausdorff distance [Huttenloder1993]. As shown in the example of Figure 8, once the reference feature most similar to the input feature (800) has been found, the selected feature (802), the patch corresponding to that feature in the pose and expression selected by the user (804, 806) will be selected. Note that each reference feature can have several patches associated with different poses and facial expressions.
   10. The colour configuration 710 selected by the user according to the user configuration 126 is applied to the patches of the different facial features which have been automatically selected to form part of the caricature. This configuration is performed by replacing the colour in the original caricature with the colour selected by the user.
   11. The composition of the caricature 712 is performed after configuring each of the poses and facial expressions specified by the draftsman 104 in the recording phase 108. Each of the patches (obtained from the reference caricatures) of the facial features is deformed (for example, by means of related transformations or simple scaling) and is positioned so that its reference points fit with those corresponding to the caricatured mesh D. Subsequently, the accessories and/or hairstyles selected by the user according to the user configuration 126 are added, the selected configuration colour 132 also being applied to obtain the generated caricature.
      Figure 9 shows an example of a caricature 900 in which each of the facial features has been separated in its corresponding "patch" (hair 902, left eyebrow 904, right eyebrow 906, nose 908, right eye 910, left eye 912, mouth 914, right ear 916, left ear 918, contour of the face 920).

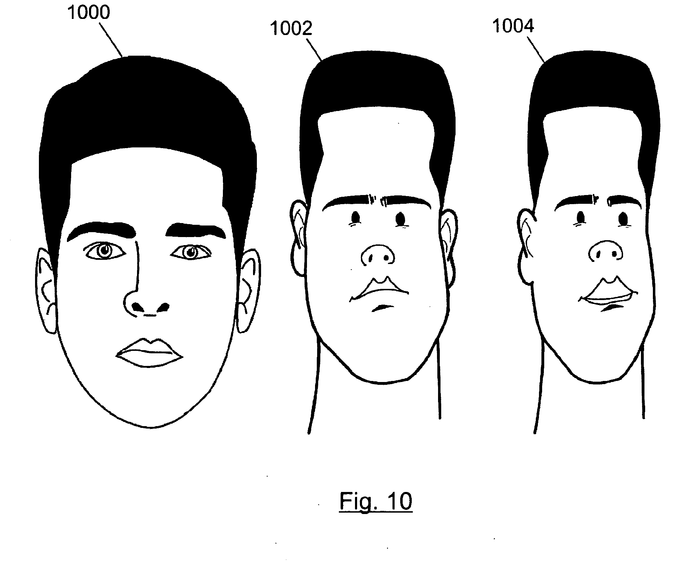

      Figure 10 shows an example of automatic caricaturing where a caricature has been generated automatically in a frontal pose and with a neutral expression 1002 and in an intermediate pose and with a smiling expression 1004 from the photograph 1000 input by the user.

## Claims

1. An automatic caricaturing system maintaining the style of the draftsman to generate a caricature (132) from an input photograph (124), **characterised in that** it comprises an automatic caricaturing module (128) configured for:
- obtaining (700) a facial point reference mesh of a face present in the input photograph (124);
- accessing a caricaturing style model (118) of the draftsman (104) generated from reference photographs and their corresponding reference caricatures made by the draftsman (104), and obtaining from said style model (118):
• a transformation model *T* (420) collecting the transformations necessary for converting reference photograph meshes into their corresponding caricatured meshes;
• an appearance model *A* (424) collecting facial feature appearance descriptors of reference photographs;
• configuration information (206) in which the manner of composing the caricature is specified;
- applying (706) the transformation model *T* (420) to the obtained mesh of the input photograph (124) to obtain a caricatured mesh *D*;
- obtaining the facial feature appearance descriptors of the input photograph (124), comparing them with the descriptors of the reference photographs included in the appearance model *A* (424), and selecting (708) the facial features (802) most similar to the input features (800) of the input photograph (124) depending on said comparison and the patches (902, 904, 906, 908, 910, 912, 914, 916, 918, 920) corresponding to each of these features to be applied in generating the caricature according to the configuration information (206);
- composing (712) the caricature (132) using the configuration information (206) and by means of placing and deforming the patches (902, 904, 906, 908, 910, 912, 914, 916, 918, 920) corresponding to each of the selected facial features, such that their reference points adapt to those of the obtained caricatured mesh *D*.

2. The system according to claim 1, **characterised in that** the automatic caricaturing module (128) is additionally configured for:
- obtaining from the style model (118):
• a normalisation model *N* (408), including a normalisation model *N_{R}* for normalising reference photograph meshes (404) and a normalisation model *N_{C}* for normalising meshes of their corresponding reference caricatures (406);
• a dimensionality reduction model *R* (416), including a dimensionality reduction model *R_{R}* obtained with reference photograph meshes (412) and a dimensionality reduction model *R_{C}* obtained with meshes of their corresponding reference caricatures (414);
- normalising (702) the obtained mesh of the input photograph (124) using the normalisation model *N* (408), obtaining a normalised mesh *M*;
- reducing the dimensionality (704) of the normalised mesh *M* by means of its projection by applying the dimensionality reduction model *R* (416), obtaining a mesh *M*' before applying the transformations (706);
- reconstructing (714) the caricatured mesh *D* from the projection *D*' resulting from applying the transformations (706) and the dimensionality reduction model *R* (416).

3. The system according to any of the preceding claims, **characterised in that** the configuration information (206) additionally contains the specifications for composing the caricature in different poses and facial expressions.

4. The system according to any of the preceding claims, **characterised in that** the automatic caricaturing module (128) is additionally configured for applying a colour configuration (710) to the selected facial feature patches, a pose and facial expression selection, a hairstyle selection or an accessory selection to be added to the generated caricature according to a specific user configuration (126).

5. The system according to any of the preceding claims, **characterised in that** it comprises a learning module (116) configured for:
- learning the transformations (418) necessary for converting reference photograph meshes into their corresponding caricatured meshes, obtaining a transformation model *T* (420);
- extracting (422) an appearance model *A* (424) with facial feature appearance descriptors of reference photographs;
- generating (426) the style model (118), including the transformation model *T* (420), the appearance model *A* (424) and the configuration information (206).

6. The system according to claim 5, **characterised in that** the learning module (116) is additionally configured for:
- normalising reference meshes (402), obtaining a normalisation model *N* (408) including a normalisation model *N_{R}* for normalising reference photograph meshes (404) and a normalisation model *N_{C}* for normalising meshes of their corresponding reference caricatures (406);
- performing dimensionality reduction (410) on the normalised reference meshes, obtaining a dimensionality reduction model *R* (416) including a dimensionality reduction model *R_{R}* obtained with reference photograph meshes (412) and a dimensionality reduction model *R_{C}* obtained with meshes of their corresponding reference caricatures (414);
- including (426) the normalisation model *N* (408) and the dimensionality reduction model *R* (416) in the generated style model (118).

7. The system according to any of the preceding claims, **characterised in that** it comprises a recording module (110) configured for:
- collecting reference facial points (200) for obtaining reference meshes (204) of the reference photographs and their corresponding reference caricatures;
- collecting configuration data (202) for obtaining configuration information (206).

8. The system according to any of the preceding claims, **characterised in that** the configuration information (206) collected in the recording module (110) includes the configuration for different poses and/or facial expressions, a colour palette, the configuration for different accessories and/or the configuration for different hairstyles.

9. The system according to any of the preceding claims, **characterised in that** it comprises:
- a reference photograph repository (102) where the reference photographs are stored, and
- a reference caricature repository (104) where the caricatures of the reference photographs made by the draftsman (104) are stored.

10. An automatic caricaturing method maintaining the style of the draftsman to generate a caricature (132) from an input photograph (124), **characterised in that** it comprises:
- obtaining (700) a facial point reference mesh of a face present in the input photograph (124);
- accessing a caricaturing style model (118) of the draftsman (104) generated from reference photographs and their corresponding reference caricatures made by the draftsman (104), and obtaining from said style model (118):
• a transformation model *T* (420) collecting the transformations necessary for converting reference photograph meshes into their corresponding caricatured meshes;
• an appearance model *A* (424) collecting facial feature appearance descriptors of reference photographs;
• configuration information (206) in which the manner of composing the caricature is specified;
- applying (706) the transformation model *T* (420) to the obtained mesh of the input photograph (124) to obtain a caricatured mesh *D*;
- obtaining the facial feature appearance descriptors of the input photograph (124), comparing them with the descriptors of the reference photographs included in the appearance model *A* (424), and selecting (708) the facial features (802) most similar to the input features (800) of the input photograph (124) depending on said comparison and the patches (902, 904, 906, 908, 910, 912, 914, 916, 918, 920) corresponding to each of these features to be applied in generating the caricature according to the configuration information (206);
- composing (712) the caricature (132) using the configuration information (206) and by means of placing and deforming the patches (902, 904, 906, 908, 910, 912, 914, 916, 918, 920) corresponding to each of the selected facial features, such that their reference points adapt to those of the obtained caricatured mesh *D*.

11. The method according to claim 10, **characterised in that** comprises:
- obtaining from the style model (118):
• a normalisation model *N* (408), including a normalisation model *N_{R}* for normalising reference photograph meshes (404) and a normalisation model *N_{C}* for normalising meshes of their corresponding reference caricatures (406);
• a dimensionality reduction model *R* (416), including a dimensionality reduction model *R_{R}* obtained with reference photograph meshes (412) and a dimensionality reduction model *R_{C}* obtained with meshes of their corresponding reference caricatures (414);
- normalising (702) the obtained mesh of the input photograph (124) using the normalisation model *N* (408), obtaining a normalised mesh M;
- reducing the dimensionality (704) of the normalised mesh *M* by means of its projection by applying the dimensionality reduction model *R* (416), obtaining a mesh *M*' before applying the transformations (706);
- reconstructing (714) the caricatured mesh *D* from the projection *D*' resulting from applying the transformations (706) and the dimensionality reduction model *R* (416).

12. The method according to any of claims 10 to 11, **characterised in that** the configuration information (206) includes the specifications for composing the caricature in different poses and/or facial expressions, a colour palette, the configuration for different accessories and/or the configuration for different hairstyles.

13. The method according to any of claims 10 to 12, **characterised in that** it comprises applying a colour configuration (710) to the selected facial feature patches, a pose and facial expression selection, a hairstyle selection or an accessory selection to be added to the generated caricature according to a specific user configuration (126).

14. The method according to any of claims 10 to 13, **characterised in that** it comprises:
- collecting reference facial points (200) for obtaining reference meshes (204) of the reference photographs and their corresponding reference caricatures;
- collecting configuration data (202) for obtaining configuration information (206).
